# EUROPEAN PATENT SPECIFICATION

(11) **EP 3 309 808 B1**
(45) Date of publication and mention of the grant of the patent: **11.03.2020**
(21) Application number: 15895010.5
(22) Date of filing: 30.11.2015
(51) Int. Cl.: H01H 33/42, H01H 33/64, H02B 13/035, H02B 13/075, H01H 33/02, H01H 33/12

(54) **SWITCHING APPARATUS FOR GAS INSULATED SWITCHGEAR, AND GAS INSULATED SWITCHING DEVICE**
SCHALTVORRICHTUNG FÜR EINE GASISOLIERTE SCHALTANLAGE UND GASISOLIERTE SCHALTVORRICHTUNG
APPAREIL DE COMMUTATION POUR APPAREILLAGE À ISOLATION GAZEUSE, ET DISPOSITIF DE COMMUTATION À ISOLATION GAZEUSE

(30) Priority: 10.06.2015 WO PCT/JP2015/066670
(43) Date of publication of application: 18.04.2018
(73) Proprietor: Mitsubishi Electric Corporation, Chiyoda-ku Tokyo 100-8310 (JP)
(72) Inventor: SANO, Koji, Tokyo 100-8310 (JP); INOUE, Naoaki, Tokyo 100-8310 (JP); ARIOKA, Masahiro, Tokyo 100-8310 (JP)
(74) Representative: Sajda, Wolf E.
(86) International application number: PCT/JP2015/083577
(87) International publication number: WO 2016/199326

(56) References cited:
- EP-A1- 2 608 240
- WO-A1-2015/190500
- CN-U- 203 631 403
- JP-A- H1 153 998
- JP-A- 2010 027 226
- JP-A- 2013 005 505
- JP-U- H0 186 029
- JP-U- H0 237 435
- JP-U- H0 237 435
- JP-U- S5 598 110

## Description

### Technical field

The present invention relates to a switch, and relates to a switch for gas insulated switchgear and a gas insulated switching device including a three-position switch which enables selection of switch stages of ON, OFF, and ground and which is provided in a sealed compartment in which an insulation gas is sealed.

### Background Art

As conventional three-position switches, Patent Document 1 proposes a structure in which, when an insulated connection rod attached to blades for three phases is moved approximately horizontally, each blade rotates to move in an arc shape to a position of ON, OFF, or ground, and Patent Document 2 proposes a structure in which a movable contactor and a fixation contactor are provided at both ends of a vacuum valve, the fixation contactors for three phases are connected in an insulated manner, a movable portion including the vacuum valve rotates about each fixation contactor, and a rotation shaft of the movable portion and a connection driving portion are directed in the same direction. Another example of switch of the prior art is disclosed by EP-A-2608240.

### List of Citations

### Patent Documents

Patent Document 1: German Patent DE 1 981 6592 B4
Patent Document 2: German Patent DE 1 985 7170 B4

### Summary of the Invention

### Problems to be solved by the Invention

In a switch tank which is one of components of a gas insulated switchgear, since an insulation gas is sealed therein, the entire tank size can be downsized by reducing the arrangement of main circuit conductors. However, multiple insulating parts, bolts, pins, and the like are used for configuring a mechanism for transferring a drive force to an adjacent phase, and therefore there is a disadvantage that it is difficult to perform an assembly work for attaching and connecting those parts in a sealed compartment partitioned in a small size and many work steps are needed.

In a switch tank, a configuration in which switch blades for switching among ON, OFF, and ground through rotational operation are arranged for three phases in a coaxial straight line, contributes to reduction in tank width. However, there is a technical difficulty in an engagement structure and a drive force transfer structure of an insulated mechanism portion that gives a rotational drive force to the blades for three phases while ensuring insulation among phases and from the ground in a narrow space.

An object of the present invention is to obtain a switch for gas insulated switchgear and a gas insulated switching device that enable reduction in the number of components and improvement in assembly performance.

### Solution to the Problems

A switch for gas insulated switchgear according to the present invention includes: switch blades for multiple phases which perform three-position switching among ON, OFF, and ground, using a rotation shaft; and phase-to-phase connection mechanisms made of an insulating material, which support the switch blades for the phases and which connect the switch blades for the phases and cause them to cooperate with each other.

The phase-to-phase connection mechanisms include fitting couplings each composed of a large-diameter endless frame body and a small-diameter endless frame body which are fitted to each other. The fitting couplings are arranged on the same axial line.

### Effect of the Invention

In the switch for gas insulated switchgear according to the present invention, attachment and connection works for main circuit parts using pins, bolts, and the like in a sealed compartment partitioned in a small size, can be decreased. Therefore, the assembly work is facilitated, the number of components can be decreased, and the number of assembly work steps can be decreased, whereby an effect of reducing the cost for manufacturing a gas insulated switchgear is obtained.

In addition, without using pins, bolts, and the like for a connection part between a main circuit portion and an operation mechanism portion and a connection part between adjacent phases, the phase-to-phase connection mechanisms are connected to each other using fitting couplings. Thus, it is possible to provide a gas insulated switchgear that enables assembly work to be easily performed without using assembly work tools, and enables device size reduction by reducing the size of a switch tank.

### Brief Description of the Drawings

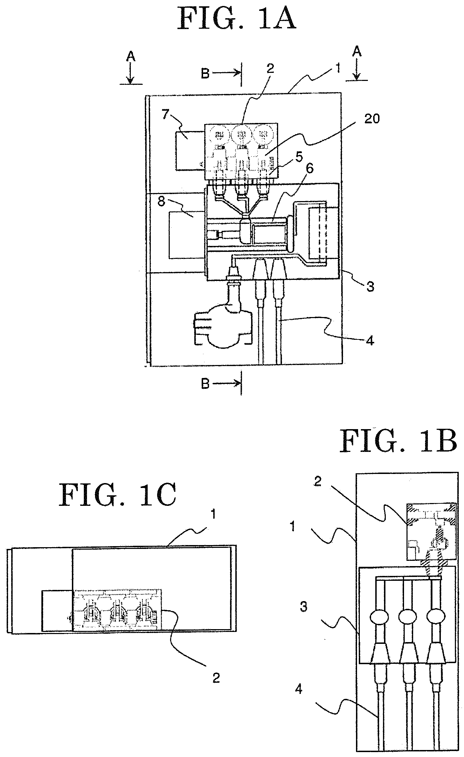

- FIGS. 1A to 1C: show the entire configuration of a gas insulated switchgear according to Embodiment 1 of the present invention, in which FIG. 1A is a side sectional view, FIG. 1B is a front sectional view as seen from a B-B arrow direction in FIG. 1A, and FIG. 1C is a plan view as seen from an A-A arrow direction in FIG. 1A.

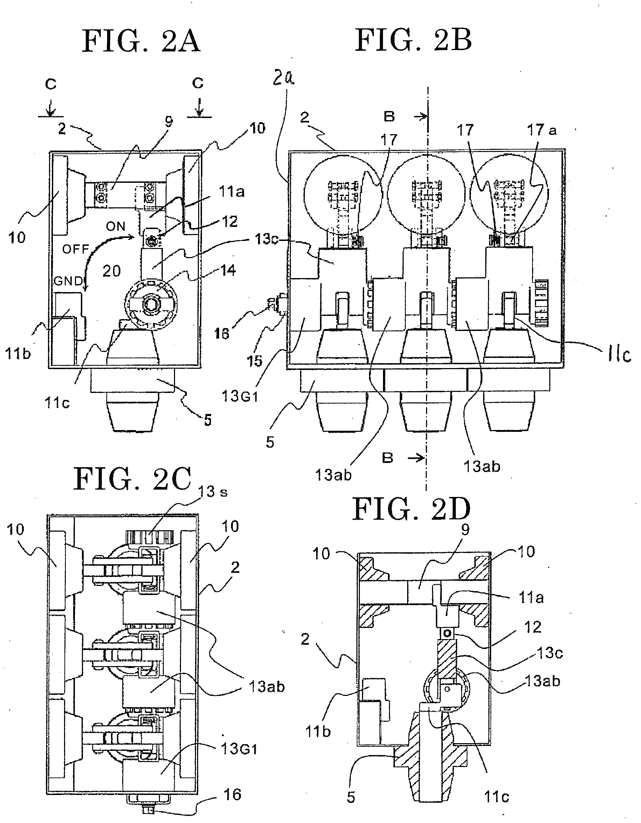

- FIGS. 2A to 2D: are views showing the internal structure of a switch tank of the gas insulated switchgear according to Embodiment 1 of the present invention, in which FIG. 2A is a front sectional view, FIG. 2B is a side sectional view, FIG. 2C is a plan view as seen from a C-C arrow direction in FIG. 2A, and FIG. 2D is a front sectional view as seen from a B-B arrow direction in FIG. 2B.

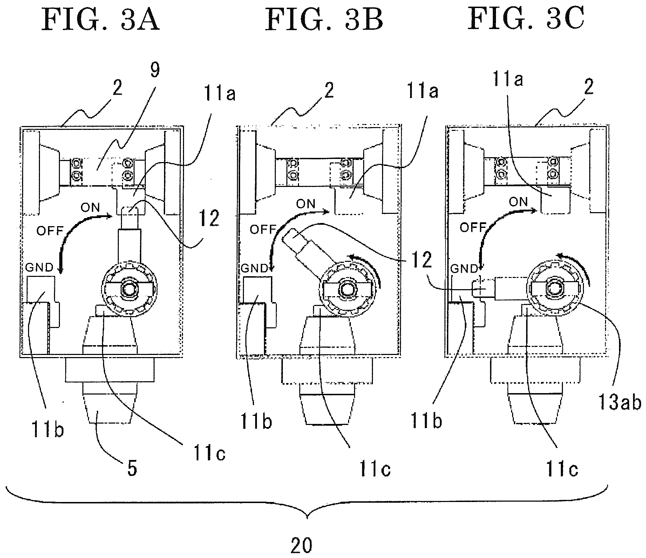

- FIGS. 3A to 3C: are front views showing the respective operation states, "ON", "OFF", and "ground", of a switch blade 12 in FIG. 2A, in which FIG. 3A shows an ON state of the switch blade, FIG. 3B shows an OFF state of the switch blade, and FIG. 3C shows a ground state of the switch blade.

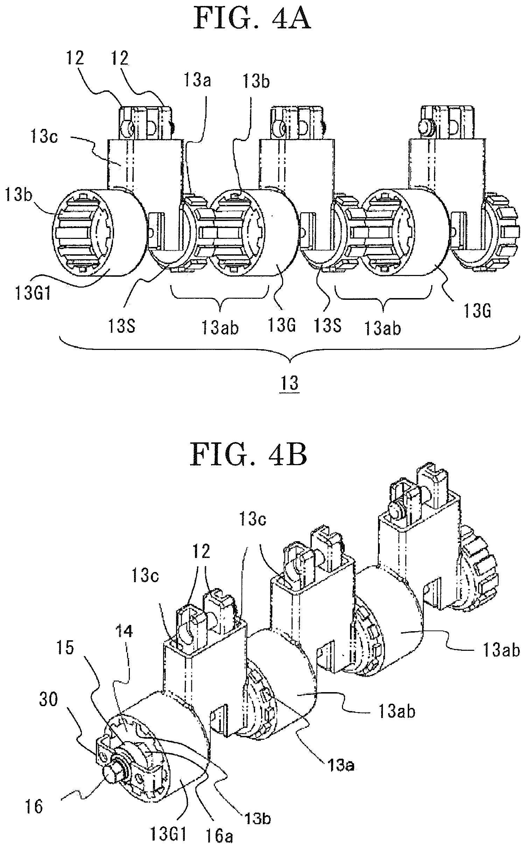

- FIGS. 4A and 4B: show phase-to-phase connection mechanisms 13 supporting the switch blades 12 according to Embodiment 1 of the present invention, in which FIG. 4A is a perspective exploded view and FIG. 4B is a perspective view in an assembled state.

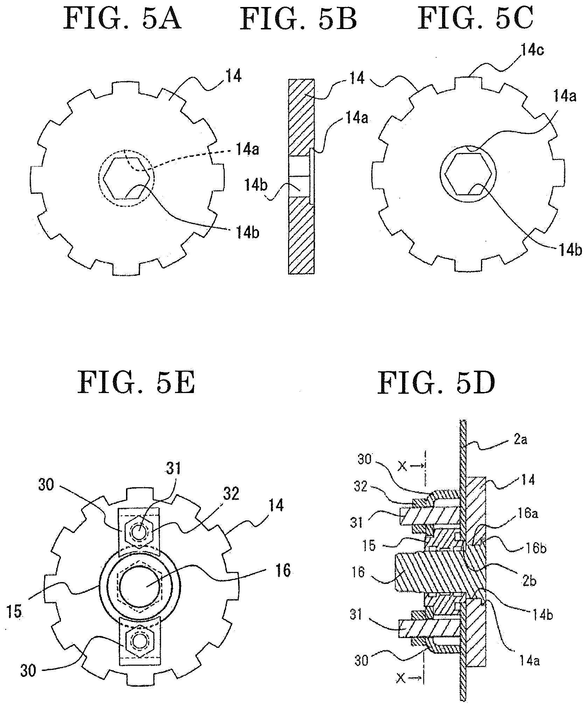

- FIGS. 5A to 5E: show a connection adapter 14 and a seal shaft 16 of the phase-to-phase connection mechanism according to Embodiment 1 of the present invention, in which FIG. 5A is a front view of the connection adapter 14, FIG. 5B is a side sectional view along a center line of the connection adapter 14, FIG. 5C is a back view of the connection adapter 14, FIG. 5D is a sectional view showing an attachment configuration of the connection adapter 14, a seal case 15, and the seal shaft 16 at a tank wall penetrating portion of the switch tank 2, and FIG. 5E is a front view as seen from an X-X direction in FIG. 5D when the tank wall is removed.

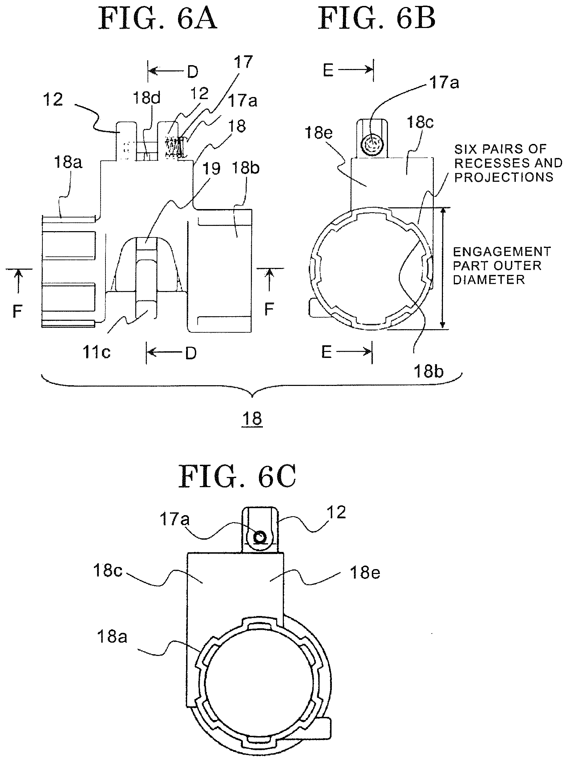

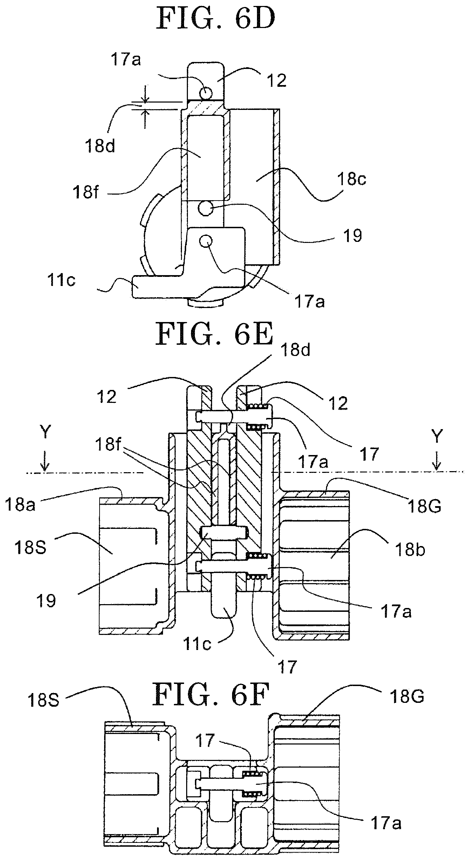

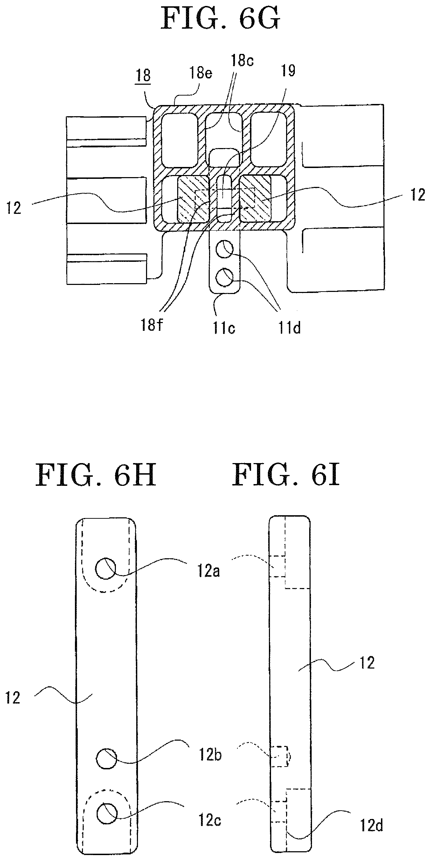

- FIGS. 6A to 6I: show a phase-to-phase connection mechanism 18 supporting the switch blades 12 according to Embodiment 2 of the present invention, in which FIG. 6A is a left side view, FIG. 6B is a front view, FIG. 6C is a back view, FIG. 6D is a sectional view as seen from a D-D arrow direction in FIG. 6A, FIG. 6E is a sectional view as seen from an E-E arrow direction in FIG. 6B, FIG. 6F is a sectional view along an F-F line positioned on the central axis of a pin 17a in FIG. 6A as seen from the F-F arrow direction, FIG. 6G is a plan sectional view as seen from a Y-Y direction in FIG. 6E, FIG. 6H is a front view of the switch blade 12 shown in FIG. 6E, and FIG. 6I is a right side view of FIG. 6H.

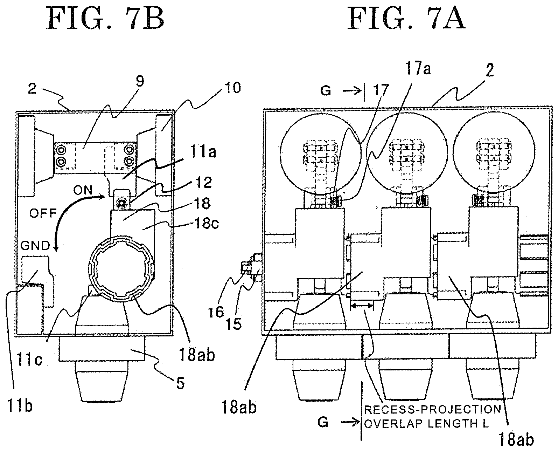

- FIGS. 7A and 7B: are views showing the internal structure of a switch tank of a gas insulated switchgear according to Embodiment 2 of the present invention, in which FIG. 7A is a right side view and FIG. 7B is a sectional view as seen from a G-G arrow direction in FIG. 7A.

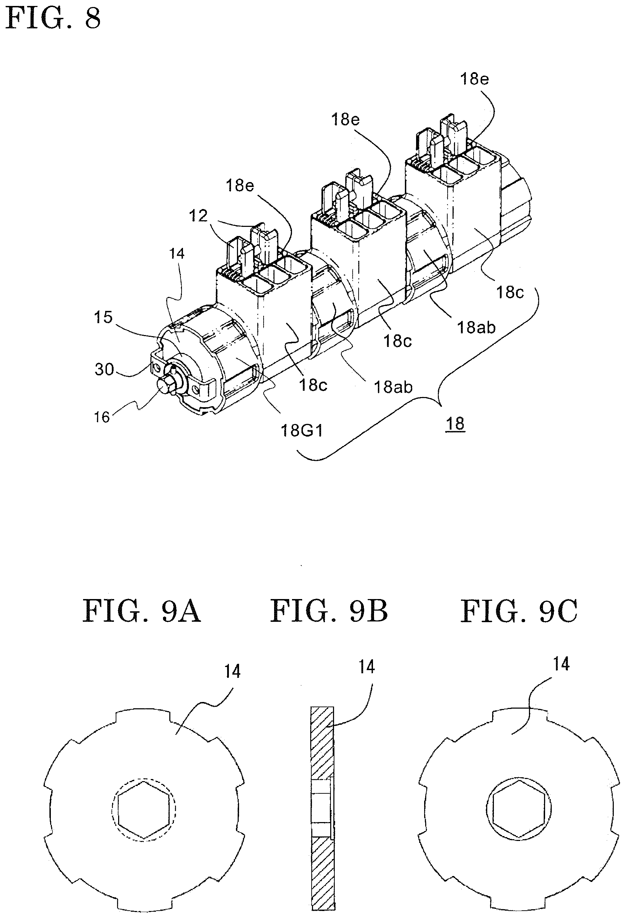

- FIG. 8: is a perspective view showing an assembled state of the phase-to-phase connection mechanisms 18 supporting the switch blades 12 according to Embodiment 2 of the present invention.
- FIGS. 9A to 9C: show a connection adapter 14 according to Embodiment 2 of the present invention, in which FIG. 9A is a front view of the connection adapter 14, FIG. 9B is a side sectional view along a center line of the connection adapter 14, and FIG. 9C is a back view of the connection adapter 14.

### Description of Embodiments

Hereinafter, embodiments of the present invention will be described with reference to the drawings.

In the drawings, the same reference character denotes the same or corresponding part.

### Embodiment 1

A gas insulated switchgear according to Embodiment 1 will be described with reference to FIGS. 1A to 5E.

The gas insulated switchgear 1 having an entire configuration shown in FIG. 1A to FIG. 1C includes: a circuit breaker tank (first sealed compartment) 3 storing a circuit breaker 6; a circuit breaker operation mechanism 8 for performing operation of the circuit breaker 6; a switch tank (second sealed compartment) 2 storing a switch 20 and a horizontal bus 9; a switch operation mechanism 7 for performing operation of the switch 20; a power cable 4 for receiving power from a power system or feeding power to a load; and the like.

In a case where the gas insulated switchgear is used for power feeding, power is received from the bus, and the power is fed through the switch 20, a compartment bushing 5, and then the circuit breaker 6, to the power cable 4 connected to a load. It is noted that, in the circuit breaker tank 3, an insulation gas such as SF6 gas or dry air is sealed, whereby the stored devices and a main circuit conductor are insulated.

FIGS. 2A to 2D show the internal structure of the switch tank 2 of the gas insulated switchgear 1 shown in FIGS. 1A to 1C. Via the compartment bushing 5 attached so as to penetrate in an airtight manner from the circuit breaker tank 3 to the switch tank 2, the switch 20 in the switch tank is connected to bus bushings 10 through a compartment-bushing-side fixed terminal 11c, the switch blade 12, and then an ON-side fixed terminal 11a, and feeds power to the bus. The bus bushing 10 and the bus bushing 10 are connected by the horizontal bus 9.

Regarding ground of the switch 20, a load-side circuit is grounded when the switch blade 12 bites into a ground-side fixed terminal 11b fixed to the switch tank 2. It is noted that 17 denotes contact pressure springs for applying loads to contact portions on both sides (rotation shaft side, and contact portion side in contact with the above other terminal) of the switch blade 12, and the contact pressure springs 17 are each fastened by a pin 17a.

FIGS. 3A to 3C show operation states of the switch 20. The switch 20 has the switch blades 12 for three phases. By a drive force being transferred from the switch operation mechanism 7 by leftward rotation as seen from the front, each switch blade 12 is brought into any of three-position switching states, i.e., ON position in FIG. 3A, OFF position (disconnection position) in FIG. 3B, and ground position in FIG. 3C.

The switch blades 12 for respective phases are supported by phase-to-phase connection mechanisms 13 having a configuration shown in detail in FIGS. 4A and 4B, and the phase-to-phase connection mechanisms 13 connect the switch blades for respective phases and cause them to cooperate with each other as described later.

FIGS. 4A and 4B show the phase-to-phase connection mechanisms 13 supporting the switch blades 12, and in this example, three phase-to-phase connection mechanisms 13 are connected for three phases.

The phase-to-phase connection mechanisms 13 include: box-shaped blade support portions 13c which support the switch blades 12 and which have a quadrangular cross section and are made of an insulating material; and fitting couplings 13ab which are made of an insulating material and serve also as blade rotation shafts of the switch blades 12.

As shown in FIGS. 4A and 4B, each blade support portion 13c has a quadrangular box shape, stores the switch blade 12 in this box, and covers the outer periphery of the switch blade 12 except for its end contact portion which is contactable with and separable from the ON-side fixed terminal 11a or the ground-side fixed terminal 11b. That is, the blade support portion 13c surrounds and holds the switch blade 12 such that only the end contact portion of the switch blade 12 protrudes from the end of the box-shaped blade support portion 13c.

The width of the blade support portion 13c in the phase-to-phase direction of the main circuit is set to be greater than the attachment width of the contact pressure spring 17 and the pin 17a (i.e., a charge portion of the switch blade 12) attached to the switch blade 12. Therefore, in the attachment part of the contact pressure spring 17 and the pin 17a, an electric field between the main circuit phases or with respect to the ground can be relaxed, whereby insulation of the switch blades 12 among phases or from the ground can be enhanced.

In addition, the fitting coupling 13ab is used for transferring, to an adjacent phase, a drive force transferred through a connection adapter 14 (described later) from a seal shaft 16 (described later) connected to the switch operation mechanism 7.

The fitting coupling 13ab is composed of: a cup-shaped small-diameter endless frame portion 13S having a plurality of projecting portions 13a on the outer circumferential surface thereof and protruding in a blade rotation shaft direction; and a cup-shaped large-diameter endless frame portion 13G having a plurality of recessed portions 13b in the inner circumferential surface thereof and protruding in the blade rotation shaft direction, and the small-diameter endless frame portion 13S and the large-diameter endless frame portion 13G are arranged in directions opposite to each other on the same axial line.

The fitting coupling 13ab is formed by fitting the projecting portions 13a and the recessed portions 13b to each other, and functions as a rotation shaft portion of the switch blade 12 as described above. It is noted that the fitting coupling 13ab is contactable and separable by the projecting portions 13a and the recessed portions 13b being slid in the rotation shaft direction, and is connected by the projecting portions 13a and the recessed portions 13b being engaged with each other.

The thicknesses, the numbers, and the shapes of the projecting portions 13a and the recessed portions 13b are determined so as to obtain a necessary torsional strength, on the basis of loads when the switch blade 12 is joined to the ON-side fixed terminal 11a or the ground-side fixed terminal 11b. In the drawings, the division numbers of the projecting portions 13a and the recessed portions 13b are twelve, but are not limited thereto. It is noted that, normally, the numbers of the projecting portions 13a and the recessed portions 13b are set to be equal to each other in terms of operation.

It is noted that each member (13ab, 13a, 13b, 13c, 13G, 13S) composing the phase-to-phase connection mechanism 13 is formed of an insulating material, and as the insulating material, a thermoplastic resin (polybutylene terephthalate [PBT], polyethylene, polypropylene, etc.) or a thermosetting resin (such as epoxy) is used.

Thus, the blade support portion 13c functions as an insulating barrier among phases and against the ground.

A mechanism for connection of the phase-to-phase connection mechanism 13 to the switch operation mechanism 7 is composed of: a metallic gear-shaped connection adapter 14 to be engaged (fitted) with the recessed portions 13b of the large-diameter endless frame portion 13G of the phase-to-phase connection mechanism 13; a seal case 15 having contact with outside while ensuring airtightness between inside and outside of the sealed compartment; the seal shaft 16; a holder metal member 30; and other members. The configuration of this mechanism will be described in detail with reference to FIGS. 5A to 5E.

As shown in FIG. 5D, the connection mechanism forms a penetrating portion of the tank wall 2a of the switch tank 2.

As shown in FIGS. 5A to 5C, the connection adapter 14 has a counterbore portion 14a and a hexagonal through hole 14b. The seal shaft 16 has, at an inner end, a flange-shaped large-diameter part 16b to be fitted to the counterbore portion 14a, and has, on the inner side of the large-diameter part 16b, a hexagonal-bar-shaped engagement portion 16a to be inserted into the hexagonal through hole 14b.

By the above configuration, a rotational driving torque from the seal shaft 16 is transferred to the connection adapter 14 via the hexagonal through hole 14b and the hexagonal-bar-shaped engagement portion 16a, and further, since teeth 14c on the outer circumference of the connection adapter 14 are engaged with the recessed portions 13b of the phase-to-phase connection mechanism 13, the drive force from the connection adapter 14 is transferred to the phase-to-phase connection mechanism 13, and then, by the phase-to-phase connection mechanism 13 being driven, the switch 20 is operated to be opened or closed.

The seal case 15 is attached coaxially to the outer circumference of the seal shaft 16 penetrating the tank wall, the end portion of the seal shaft 16 is formed in a hexagonal-bar shape, and the seal shaft 16 is fitted to a drive shaft (not shown) of the switch operation mechanism 7, whereby a driving torque is transferred to the seal shaft 16. The outer circumferential surface, of the seal shaft 16, to which the seal case 15 is attached is formed in a smooth cylindrical shape, and slides on and contacts with a plurality of seal members (not shown) such as O rings provided in seal grooves formed in a recessed shape in the inner circumferential surface of the seal case 15, thereby keeping airtightness.

In addition, a seal groove having a recessed shape is also formed in the attachment surface of the seal case 15 that contacts with the tank wall surface, whereby airtightness is kept between the tank wall and a seal member (not shown) such as an O ring provided in the seal groove. On the outer surface of the tank wall 2a, two studs 31 having axes parallel with the axis of the through hole are welded at positions separated from each other by a predetermined distance on opposite sides of the through hole 2b of the tank wall 2a as seen from the front side of the gas insulated switchgear 1.

A male thread is formed around the outer circumference of each stud 31, and a holder metal member 30 formed in an L shape is fastened to each stud 31 by a nut 32. Then, ends of the L-shaped holder metal members press the seal case 15 to the tank wall side, thereby keeping airtightness of the tank wall penetrating portion.

As described above, in the phase-to-phase connection mechanism 13, connection to an adjacent phase is made by engagement of the projecting portions 13a and the recessed portions 13b, and as shown in FIGS. 4A and 4B, the phase-to-phase connection mechanisms 13 are sequentially combined from the left one (first), followed by the central one, and then the right one, and the shape for the engagement is cylindrical in the present Embodiment 1.

However, the engagement may be achieved by combination of polygonal shapes such as triangular shapes. In the case of polygonal shapes, it is not necessary to provide projection-recess shapes, and any polygonal shapes may be employed as long as projections and recesses of the polygonal shapes themselves are engaged with each other.

In addition, since the tank wall penetrating portion of the switch tank 2 has an airtight configuration as described above, it is possible to obtain a simplified airtight structure, and thus it is possible to obtain a small-sized gas insulated switchgear that can be easily manufactured.

As described above, according to the present Embodiment 1, in configuring an insulated mechanism for transferring a drive force to an adjacent phase, the function thereof can be achieved by engagement of recesses and projections which are shapes provided to the phase-to-phase connection mechanism 13. Therefore, an effect of enabling reduction in the number of components is obtained. In addition, since the charge portion such as the blade is insulated by the phase-to-phase connection mechanism 13 as a barrier, the distance for insulation among phases and from the ground can be shortened, whereby an effect of enabling size reduction in the switch tank is also obtained.

### Embodiment 2

A gas insulated switchgear according to Embodiment 2 will be described with reference to FIGS. 6A to 9C.

In Embodiment 2, a phase-to-phase connection mechanism 18 for supporting the switch blades 12 has a current route in which current from the compartment-bushing-side fixed terminal 11c flows to be divided into two switch blades 12, and has a structure in which loads are applied to conductor contact portions on the fixed side and the movable side by pin-coupling between the contact pressure springs 17 and the pins 17a.

The phase-to-phase connection mechanism 18 for supporting the switch blades 12 is composed of: a box-shaped blade support portion 18e supporting the switch blades 12 and having a quadrangular cross section; and a fitting coupling 18ab serving also as a blade rotation shaft of the switch blades 12. As in Embodiment 1, the fitting coupling 18ab is used for transferring, to an adjacent phase, a drive force from the seal shaft 16 connected to the switch operation mechanism 7.

It is noted that a mechanism for connection of the phase-to-phase connection mechanism 18 to the switch operation mechanism 7 is composed of: a metallic connection adapter 14 (FIGS. 9A to 9C) to be engaged (fitted) with recessed portions 18b of a large-diameter endless frame portion 18G of the phase-to-phase connection mechanism 18; the seal case 15 having contact with outside while ensuring airtightness between inside and outside of the switch tank 2 (sealed compartment); the seal shaft 16; and the like, as shown in FIG. 8.

The fitting coupling 18ab is composed of: a cup-shaped small-diameter endless frame portion 18S having projecting portions 18a on the outer circumferential surface thereof and protruding in a blade rotation shaft direction; and a cup-shaped large-diameter endless frame portion 18G having recessed portions 18b in the inner circumferential surface thereof and protruding in the blade rotation shaft direction, and the small-diameter endless frame portion 18S and the large-diameter endless frame portion 18G are arranged in directions opposite to each other on the same axial line.

The fitting coupling is formed by fitting the projecting portions 18a and the recessed portions 18b to each other, and functions as a rotation shaft portion of the switch blade 12 as described above. It is noted that the fitting coupling 18ab is separably connected by the projecting portions 18a and the recessed portions 18b. In Embodiment 2, the case where the division number of the recess-projection shape is six is shown.

In the case where the phase-to-phase connection mechanism 18 is formed by a thin structure like a molded product, a stress occurring at a cutout portion due to part-to-part interference can be reduced by attaching a reinforcing rib 18c as shown in FIG. 6D.

Regarding positioning in the height direction (longitudinal direction of blade) of the phase-to-phase connection mechanism 18, as shown in FIG. 6D and FIG. 6E, abutting portions of a positioning pin 19 attached between two switch blades 12 and a lower end of an inner partition wall 18f of the phase-to-phase connection mechanism 18 are brought into contact with each other, and abutting portions of an upper end of an upper rib 18d (protrusion) of the phase-to-phase connection mechanism 18 and a lower-side circumferential surface of the pin 17a on the end side of the switch blade 12 are brought into contact with each other, whereby movement of the phase-to-phase connection mechanism 18 in the longitudinal direction of the blade is suppressed, and thus, the phase-to-phase connection mechanism 18 is kept at a predetermined position without moving in the longitudinal direction of the blade even when the phase-to-phase connection mechanism 18 is rotationally operated.

It is noted that a hole 12b for the positioning pin 19, formed in the switch blade 12 is a blind hole not penetrating the switch blade 12. The positioning pin 19 is held at a predetermined position between two switch blades 12. It is noted that holes 12a, 12c are holes for pins.

It is noted that each member (18ab, 18a, 18b, 18c, 18d, 18e, 18f) composing the phase-to-phase connection mechanism 18 is formed of an insulating material. As the insulating material, a thermoplastic resin (polybutylene terephthalate [PBT], polyethylene, polypropylene, etc.) or a thermosetting resin (such as epoxy) is used.

In the phase-to-phase connection mechanism 18, if the outer diameter (radius) of the projecting portions 18a and the recessed portions 18b is increased, a load torque occurring when the switch blade 12 bites into the fixed-side terminal (ON-side fixed terminal 11a, ground-side fixed terminal 11b) is divided by the increased radius, whereby a load applied to the engagement part is reduced, and thus a stress occurring on this part can be reduced.

Further, in the phase-to-phase connection mechanism 18, if an overlap length L (FIG. 7A) of the recess-projection engagement part is increased, a load on the engagement portion given from a load torque occurring when the switch blade 12 bites into the fixed-side terminal, and the contact area at the engagement part, are increased, whereby the surface pressure can be reduced.

Due to backlash of the fitting coupling 18ab of the phase-to-phase connection mechanism 18, an angle displacement occurs to an adjacent phase, and therefore the operation necessarily starts from the side close to the operation mechanism. Thus, when a load force is high at the time of biting into the fixed terminal in ON operation and at the time of starting OFF operation, the peak of the load force can be dispersed.

In FIGS. 7A and 7B, the phase-to-phase connection mechanisms 18 are incorporated into the switch tank 2 shown in FIGS. 2A to 2D (Embodiment 1), and the recess-projection overlap length is set to be great, whereby a stress on the recess-projection engagement part can be reduced against the maximum load at the time of biting of the switch blade 12.

In FIG. 8, in the box-shaped blade support portion 18e having a quadrangular cross section of the phase-to-phase connection mechanism 18, two switch blades 12 are mounted as shown in FIG. 6E. In assembling of the switch blades 12, first, the pin 17a equipped with the contact pressure spring 17 and inserted into a base-end-side hole of the switch blade 12 is inserted into a blade attachment hole (not shown) of the compartment-bushing-side fixed terminal 11c, whereby the switch blades 12 are attached in a rotatable manner (FIG. 6E). At this time, the positioning pin 19 is also provided so as to be held between the two switch blades 12.

Next, the switch blades 12 are inserted into the box-shaped blade support portion 18e having a quadrangular cross section of the phase-to-phase connection mechanism 18, such that the inner partition wall 18f is sandwiched therebetween (FIG. 6G). The switch blades 12 are inserted to a position where the head ends of the switch blades 12 protrude from an end of the blade support portion 18e, and then the pin 17a equipped with the contact pressure spring 17 is inserted into head-end-side holes of the two switch blades 12, whereby assembly of the two switch blades 12 is completed.

Thereafter, a connection portion protruding leftward from the compartment-bushing-side fixed terminal 11c shown in FIG. 6D is brought into contact with an end of a penetrating conductor (not shown) of the compartment bushing 5 shown in FIG. 7B and FIG. 2D, and they are connected by, for example, screwing bolts into attachment holes 11d of the compartment-bushing-side fixed terminal 11c shown in FIG. 6G. Assembly of the three-position switch is thus performed.

As described above, according to Embodiment 2, an effect of decreasing the number of components and an effect of downsizing the switch tank are obtained as in Embodiment 1.

Further, the reinforcing rib 18c of the phase-to-phase connection mechanism 18 is provided on one side or right-left symmetrically as shown in FIG. 6G, whereby a function of reinforcing the quadrangular box-shaped blade support portion 18e surrounding the switch blades is obtained, and thus an effect of increasing a torsional strength with which the phase-to-phase connection mechanism 18 can withstand torsion is obtained.

In the above Embodiment 1 and Embodiment 2, the small-diameter endless frame portions 13S, 18S and the large-diameter endless frame portions 13G, 18G have cup shapes, as an example. However, without limitation thereto, members obtained by filling the inside of the cup-shape structure with an insulating material may be used.

It is noted that, within the scope of the present invention, the above embodiments may be modified or simplified as appropriate.

### Description of the Reference Characters

- 1: gas insulated switchgear
- 2: switch tank
- 3: circuit breaker tank
- 5: compartment bushing
- 6: circuit breaker
- 7: switch operation mechanism
- 8: circuit breaker operation mechanism
- 9: horizontal bus
- 10: bus bushing
- 11a: ON-side fixed terminal
- 11b: ground-side fixed terminal
- 11c: compartment-bushing-side fixed terminal
- 12: switch blade
- 13: phase-to-phase connection mechanism
- 13ab: fitting coupling
- 13a: projecting portion
- 13b: recessed portion
- 13c: blade support portion
- 13G: large-diameter endless frame portion
- 13S: small-diameter endless frame portion
- 14: connection adapter
- 15: seal case
- 16: seal shaft
- 17: contact pressure spring
- 17a: pin
- 18: phase-to-phase connection mechanism
- 18ab: fitting coupling
- 18a: projecting portion
- 18b: recessed portion
- 18c: reinforcing rib
- 18d: upper rib
- 18e: blade support portion
- 18f: inner partition wall
- 18G: large-diameter endless frame portion
- 18S: small-diameter endless frame portion
- 19: positioning pin
- 20: switch

## Claims

1. A switch for gas insulated switchgear, comprising:
a switch blade (12) which rotates around a rotation shaft, as a fulcrum, provided at an end of the switch blade (12), to cause a contact portion formed at another end thereof to contact with or be separated from a main circuit, thereby performing three-position switching among ON, OFF, and ground of the main circuit; and
phase-to-phase connection mechanisms (13) made of an insulating material and divided for respective phases, each phase-to-phase connection mechanism (13) including: a blade support portion (13c) surrounding and supporting the switch blade (12) such that the contact portion of the switch blade (12) protrudes to outside; and a large-diameter endless frame body (13G) and a small-diameter endless frame body (13S) which are formed in such shapes as to be fitted to each other, and which are arranged so as to be respectively directed toward one end and the other end in a direction of the rotation shaft, with the blade support portion (13c) provided therebetween,
wherein the phase-to-phase connection mechanisms (13) for necessary phases are provided along the rotation shaft, and
wherein the phase-to-phase connection mechanisms (13) adjacent to each other are connected by a fitting coupling (13ab) obtained by fitting and coupling the large-diameter endless frame body (13G) and the small-diameter endless frame body (13S) that are opposed to each other, and
wherein each phase-to-phase connection mechanism (13) includes a positioning pin (19) provided to the switch blade (12), and a protrusion (18d) suppressing movement of the switch blade (12) in a longitudinal direction thereof.

2. The switch for gas insulated switchgear according to claim 1,
wherein the blade support portion (13c) has a box shape and stores and holds the switch blade (12) in the box shape, and
wherein a length of the blade support portion (13c) in a phase-to-phase direction is set to be greater than a length of a charge portion of the switch blade (12).

3. The switch for gas insulated switchgear according to claim 1 or 2,
wherein at least one of the large-diameter endless frame body (13G) and the small-diameter endless frame body (13S) has a cup shape.

4. The switch for gas insulated switchgear according to any one of claims 1 to 3,
wherein the fitting coupling (13ab) is used as a rotation shaft portion between the phase-to-phase connection mechanisms (13) adjacent to each other.

5. The switch for gas insulated switchgear according to any one of claims 1 to 4,
wherein an inner circumferential portion of the large-diameter endless frame body (13G) and an outer circumferential portion of the small-diameter endless frame body (13S) are respectively formed of insulating members of which radial-direction cross sections have recess-projection shapes or polygonal shapes.

6. The switch for gas insulated switchgear according to claim 5,
wherein recess and projection portions of the large-diameter endless frame body (13G) and the small-diameter endless frame body (13S) are formed by recesses (18a) and projections (18b) the numbers of which are equal.

7. The switch for gas insulated switchgear according to any one of claims 1 to 6,
wherein each phase-to-phase connection mechanism (13) includes a contact pressure spring (17) applying a contact pressure to the switch blade (12), and a pin (17a) holding the contact pressure spring (17) and suppressing movement of the switch blade (12) in a longitudinal direction thereof.

8. The switch for gas insulated switchgear according to any one of claims 1 to 7,
wherein each phase-to-phase connection mechanism (13) has a function as an insulating barrier for the switch blade (12) among phases and against ground.

9. A gas insulated switching device using the switch for gas insulated switchgear according to any one of claims 1 to 8.

## Patentansprüche

1. Schaltvorrichtung für gasisolierte Schaltanlagen, die Folgendes aufweist:
- eine Schaltklinge (12), die sich um eine Rotationswelle als Drehpunkt dreht, die an einem Ende der Schaltklinge (12) angeordnet ist, um zu bewirken, dass ein an einem anderen Ende hiervon ausgebildeter Kontaktbereich mit einer Hauptschaltung in Kontakt kommt oder von dieser getrennt wird, so dass ein Schalten in drei Positionen zwischen EIN, AUS und Masse der Hauptschaltung durchgeführt wird; und
- Phase-zu-Phase-Verbindungsmechanismen (13), die aus einem isolierenden Material hergestellt und für die jeweiligen Phasen geteilt sind, wobei jeder Phase-zu-Phase-Verbindungsmechanismus (13) Folgendes aufweist:
- einen Klingen-Tragbereich (13c), der die Schaltklinge (12) derart umgibt und trägt, dass der Kontaktbereich der Schaltklinge (12) nach außen hin vorsteht; und
- einen Endlosrahmenkörper (13G) mit großem Durchmesser und einen Endlosrahmenkörper (13S) mit kleinem Durchmesser, die in solchen Formen ausgebildet sind, dass sie zueinander passen, und die so angeordnet sind, dass sie jeweils zu dem einen Ende und zu dem anderen Ende in Richtung der Rotationswelle ausgerichtet sind, wobei der Klingen-Tragbereich (13c) dazwischen angeordnet ist,
- wobei die Phase-zu-Phase-Verbindungsmechanismen (13) für die notwendigen Phasen entlang der Rotationswelle angeordnet sind, und
- wobei die Phase-zu-Phase-Verbindungsmechanismen (13), die nebeneinanderliegen, mittels einer Verbindungskupplung (13ab) verbunden sind, die durch Zusammenbauen und Verbinden des Endlosrahmenkörpers (13G) mit großem Durchmesser und des Endlosrahmenkörpers (13S) mit kleinem Durchmesser erhalten wird, die einander gegenüberliegen, und
- wobei jeder Phase-zu-Phase-Verbindungsmechanismus (13) einen Positionierstift (19), der an der Schaltklinge (12) angeordnet ist, und einen Vorsprung (18d) aufweist, der eine Bewegung der Schaltklinge (12) in einer Längsrichtung hiervon unterdrückt.

2. Schaltvorrichtung für gasisolierte Schaltanlagen nach Anspruch 1,
wobei der Klingen-Tragbereich (13c) eine Kastenform aufweist und die Schaltklinge (12) in der Kastenform lagert und hält, und
wobei die Länge des Klingen-Tragbereichs (13c) in einer Phase-zu-Phase-Richtung so vorgegeben ist, dass sie größer als die Länge eines Ladebereichs der Schaltklinge (12) ist.

3. Schaltvorrichtung für gasisolierte Schaltanlagen nach Anspruch 1 oder 2,
wobei mindestens einer von dem Endlosrahmenkörper (13G) mit großem Durchmesser und dem Endlosrahmenkörper (13S) mit kleinem Durchmesser eine Becherform aufweist.

4. Schaltvorrichtung für gasisolierte Schaltanlagen
nach einem der Ansprüche 1 bis 3,
wobei die Verbindungskupplung (13ab) als ein Rotationswellenbereich zwischen den Phase-zu-Phase-Verbindungsmechanismen (13) verwendet wird, die nebeneinanderliegen.

5. Schaltvorrichtung für gasisolierte Schaltanlagen
nach einem der Ansprüche 1 bis 4,
wobei ein innerer Umfangsbereich des Endlosrahmenkörpers (13G) mit großem Durchmesser und ein äußerer Umfangsbereich des Endlosrahmenkörpers (13S) mit kleinem Durchmesser jeweils aus Isolierelementen ausgebildet sind, deren Querschnitte in radialer Richtung Ausnehmungs-Vorsprungs-Formen oder polygonale Formen aufweisen.

6. Schaltvorrichtung für gasisolierte Schaltanlagen nach Anspruch 5,
wobei Ausnehmungs- und Vorsprungsbereiche des Endlosrahmenkörpers (13G) mit großem Durchmesser und des Endlosrahmenkörpers (13S) mit kleinem Durchmesser mittels Ausnehmungen (18a) und Vorsprüngen (18b) ausgebildet sind, deren Anzahl gleich ist.

7. Schaltvorrichtung für gasisolierte Schaltanlagen
nach einem der Ansprüche 1 bis 6,
wobei jeder Phase-zu-Phase-Verbindungsmechanismus (13) eine Kontaktdruckfeder (17), die einen Kontaktdruck auf die Schaltklinge (12) ausübt, und einen Stift (17a) aufweist, der die Kontaktdruckfeder (17) hält und eine Bewegung der Schaltklinge (12) in einer Längsrichtung hiervon unterdrückt.

8. Schaltvorrichtung für gasisolierte Schaltanlagen
nach einem der Ansprüche 1 bis 7,
wobei jeder Phase-zu-Phase-Verbindungsmechanismus (13) die Funktion einer isolierenden Barriere für die Schaltklinge (12) zwischen den Phasen und gegenüber der Masse aufweist.

9. Gasisolierte Schaltvorrichtung,
die eine Schaltvorrichtung für gasisolierte Schaltanlagen nach einem der Ansprüche 1 bis 8 verwendet.

## Revendications

1. Commutateur pour un appareillage de commutation à isolation gazeuse, comprenant :
- une lame de commutateur (12) qui tourne autour d'un arbre de rotation, à titre de pivot, prévu à une extrémité de la lame de commutateur (12) pour amener une portion de contact formée à une autre extrémité de celle-ci à venir en contact avec ou à être séparée d'un circuit principal, en effectuant ainsi une commutation à trois positions entre "fermeture", "ouverture", et "mise à la terre" du circuit principal ; et
- des mécanismes de connexion de phase-à-phase (13) réalisés en matériau isolant et divisés pour des phases respectives, chaque mécanisme de connexion de phase-à-phase (13) incluant :
- une portion de support de lame (13c) entourant et supportant la lame de commutateur (12) de telle façon que la portion de contact de la lame de commutateur (12) se projette vers l'extérieur ; et
- un corps de cadre sans fin de grand diamètre (13G) et un corps de cadre sans fin de petit diamètre (13S) qui sont formés avec des conformations telles qu'ils sont accordés l'un à l'autre, et qui sont agencés de manière à être respectivement dirigés vers une extrémité et vers l'autre extrémité dans une direction de l'arbre de rotation, avec la portion de support de lame (13c) prévue entre eux,
- dans lequel les mécanismes de connexion de phase-à-phase (13) pour les phases nécessaires sont prévus le long de l'arbre de rotation, et
- dans lequel les mécanismes de connexion de phase-à-phase (13) adjacents les uns aux autres sont connectés par un coupleur d'assemblage (13ab) obtenues en assemblant et en couplant le corps de cadre sans fin de grand diamètre (13G) et le corps de cadre sans fin de petit diamètre (13S) qui sont opposés l'un à l'autre, et
- dans lequel chaque mécanisme de connexion de phase-à-phase (13) inclut une tige de positionnement (19) prévue sur la lame de commutateur (12), et une projection (18d) qui supprime un mouvement de la lame de commutateur (12) dans une direction longitudinale de celle-ci.

2. Commutateur pour un appareillage de commutation à isolation gazeuse selon la revendication 1,
dans lequel la portion de support de lame (13c) a la forme d'une boîte et contient et maintient la lame de commutateur (12) dans la forme de boîte, et dans lequel une longueur de la portion de support de lame (13c) dans une direction de phase-à-phase est choisie plus grande qu'une longueur d'une portion de charge de la lame de commutateur (12).

3. Commutateur pour appareillage de commutation à isolation gazeuse selon la revendication 1 ou 2,
dans lequel l'un au moins du corps de cadre sans fin de grand diamètre (13G) et du corps de cadre sans fin de petit diamètre (13S) a la forme d'une coupelle.

4. Commutateur pour appareillage de commutation à isolation gazeuse selon l'une quelconque des revendications 1 à 3,
dans lequel le coupleur d'assemblage (13ab) est utilisé à titre de portion d'arbre de rotation entre les mécanismes de connexion de phase-à-phase (13) adjacents l'un à l'autre.

5. Commutateur pour appareillage de commutation à isolation gazeuse selon l'une quelconque des revendications 1 à 4,
dans lequel une portion circonférentielle intérieure du corps de cadre sans fin de grand diamètre (13G) et une portion circonférentielle extérieure du corps de cadre sans fin de petit diamètre (13S) sont respectivement formées d'éléments isolants dont les sections transversales en direction radiale ont des formes avec retraits-et-projections ou des formes polygonales.

6. Commutateur pour appareillage de commutation à isolation gazeuse selon la revendication 5,
dans lequel les portions en retrait et les portions en projection du corps de cadre sans fin de grand diamètre (13G) et du corps de cadre sans fin de petit diamètre (13S) sont formées par des retraits (18a) et des projections (18b) dont les nombres sont égaux.

7. Commutateur pour appareillage de commutation à isolation gazeuse selon l'une quelconque des revendications 1 à 6,
dans lequel chaque mécanisme de connexion de phase-à-phase (13) inclut un ressort de pression de contact (17) appliquant une pression de contact à la lame de commutateur (12), et une tige (17a) qui maintient le ressort de pression de contact (17) et supprime un mouvement de la lame de commutateur (12) dans une direction longitudinale de celle-ci.

8. Commutateur pour appareillage de commutation à isolation gazeuse selon l'une quelconque des revendications 1 à 7,
dans lequel chaque mécanisme de connexion de phase-à-phase (13) a pour fonction de barrière isolante pour la lame de commutateur (12) vis-à-vis des phases et vis-à-vis de la terre.

9. Dispositif de commutation à isolation gazeuse utilisant le commutateur pour appareillage de commutation à isolation gazeuse selon l'une quelconque des revendications 1 à 8.
